# EUROPÄISCHE PATENTSCHRIFT

(11) **EP 1 886 722 B1**
(45) Veröffentlichungstag und Bekanntmachung des Hinweises auf die Patenterteilung: **09.03.2011**
(21) Anmeldenummer: 07112583.5
(22) Anmeldetag: 17.07.2007
(51) Int. Cl.: B01D 37/04, B01D 29/60, B01D 29/94

(54) **Diagnoseverfahren, insbesondere zur Erkennung des Verschmutzungsgrades einer Filtereinrichtung in einer Filteranlage mit mehreren Filtereinrichtungen in Parallelschaltung**
Diagnositc process, in particular for determining the level of clogging of a filter unit in a filter containing a plurality of filter units connected in parallel
Procédé de diagnose, en particulier pour déterminer le dégré de colmatage d'une unité de filtre d'un filtre contenant une pluralité d'unités de filtre branchées en parallèle.

(30) Priorität: 09.08.2006 DE 102006037366
(43) Veröffentlichungstag der Anmeldung: 13.02.2008
(73) Patentinhaber: Voith Patent GmbH, 89522 Heidenheim (DE)
(72) Erfinder: Hosemann, Andreas, 89542, Herbrechtingen (DE)
(74) Vertreter: Jantsch, Sigrid

(56) Entgegenhaltungen:
- EP-A- 0 665 342
- EP-A- 1 306 118
- DE-A1- 2 611 885
- DE-A1- 10 108 957
- DE-B3- 10 331 683
- DE-C- 666 817
- DE-U1- 20 220 668
- US-A- 2 735 547
- US-A- 3 276 583
- US-A- 3 612 276
- US-A- 4 151 083
- US-A- 5 320 760
- US-A- 6 024 227
- US-A- 6 077 435

## Beschreibung

Die Erfindung betrifft ein Verfahren zur Diagnose insbesondere Erkennung des Verschmutzungsgrades einer Filtereinrichtung, im einzelnen mit den Merkmalen aus dem Oberbegriff des Anspruchs 1.

Aufbereitungsanlagen für Auftragsmedien zum Auftrag und/oder Veredelung einer Faserstoffbahn sind in einer Vielzahl von Ausführungen vorbekannt. Diese umfassen in der Regel einen Arbeitsbehälter, aus welchem die Auftragseinrichtung, umfassend wenigstens ein Auftragsaggregat, mit Auftragsmedium versorgt wird. Um den hohen Anforderungen hinsichtlich der Qualität des Auftrages gerecht zu werden, werden an das Auftragsmedium sehr hohe Anforderungen gestellt. Dabei kommt der Homogenität des aufzutragenden Mediums eine hohe Bedeutung zu. Die Auftragsschicht sollte keine Fehlstellen aufweisen, welche durch Störstoffe oder Lufteintrag erzeugt werden können. Dabei wird das Auftragsmedium, in der Regel eine aus Pigmenten und Zusatzstoffen bestehende Dispersion, während und nach dem Mischen in einem dem Auftragswerk vorgeschalteten Farbaufbereitungs- und Bereitstellungssystem gelagert und geführt. Zur Eliminierung von Störstoffen wird das Auftragsmedium je nach Ausführung über wenigstens einen Filter, vorzugsweise eine entsprechende Filteranlage, geführt. Dieser ist ein entsprechendes Kreislaufsystem zugeordnet, das Bestandteil des Auftragsmediumaufbereitungs- und Bereitstellungssystems ist, und die nachfolgenden Komponenten im Auftragsmediumaufbereitungssystem vor im Arbeitskreislauf befindlichen Störstoffen schützt. Dieses trägt damit maßgeblich zur Optimierung der Maschinenverfügbarkeit und der Produktqualität bei. Je einzelner Arbeitsstation beziehungsweise Auftragswerk besteht dieses Kreislauffiltersystem dabei aus mindestens einem, vorzugsweise einer Mehrzahl von parallel geschalteten Filtern, vorzugsweise Druckfiltern. Jeder Filter besteht beispielsweise aus einem Behälter mit einem entsprechenden Filterelement. Ferner sind ein Verdrängungskörper mit einem federbelasteten Schabermechanismus, ein Rückstand-Rührwerk und zum Antrieb ein Getriebemotor vorgesehen. Die einzelne Filtereinrichtung umfasst zumindest Anschlüsse für die Zuführung des zu filtrierenden Auftragsmediums, einen Anschluss für den Ablauf des als Gutstoff bezeichneten gefilterten Auftragsmediums, einen Anschluss zum Entfernen des Rückstandes sowie einen Anschluss zur Entlüftung und vorzugsweise zur Zufuhr von Frischwasser zum Zweck der Reinigung und Spülung. Das zu filtrierende Auftragsmedium wird über ein Verteilrohr dem oberen Bereich des jeweiligen Filters zugeführt und durchströmt dabei das Filterelement, beispielsweise eine Siebtrommel je nach Bauart zentrifugal oder zentripetal. Der Gutstoff verlässt die Filtereinrichtung über den in der Regel am unteren Ende des Filters angeordneten Anschluss für den Austrag des filtrierten Mediums, welcher auch als Gutstoffanschluss bezeichnet wird. Eine Filteranlage umfasst dabei mindestens eine Filtereinrichtung, vorzugsweise eine Mehrzahl von parallel zueinander angeordneten Filtereinrichtungen, die über eine zentrale Versorgungsleitung mit dem aufzutragenden Medium gespeist werden, und die ferner über eine zentrale Gutstoffleitung mit dem Auftragswerk gekoppelt sind. Zur Erkennung der Verschmutzung und eines erforderlichen Filterwechsels ist die Filteranlage mit einer zentralen Differenzdrucküberwachung zur Erkennung des Verschmutzungsgrades des Gesamtfiltersytems ausgeführt. Die Reinigung erfolgt dabei je nach ermitteltem Verschmutzungsgrad und Betriebszustand in Stufen in Abhängigkeit des Verschmutzungsgrades. Um dabei einen möglichst geringen Druckabfall über einen langen Betriebszeitraum zu ermöglichen, wird die Seite des Siebelementes wo sich der Rückstand befindet vorzugsweise kontinuierlich mittels entsprechender Reinigungseinrichtungen, insbesondere Schabern, gereinigt. Zur Optimierung der Reinigungswirkung wird die Reinigungseinrichtung in der Drehrichtung und Bewegungsrichtung periodisch gewechselt. Das sich am Boden des Behälters in der Regel ansammelnde Rückstand kann dann von dort kontinuierlich oder auch diskontinuierlich abgezogen werden. Um auch einen diskontinuierlichen Abzug während des laufenden Betriebes zu ermöglichen, sind die Filtereinrichtungen mit einer so genannten Rückstand-Schleuse ausgestattet, die einen Abzug ohne Beeinflussung der Druckverhältnisse im Innenraum des Filters ermöglichen soll. In der Regel kommt es jedoch trotz der Reinigung des Siebelementes und der Rückstand-Ausschleusung zu einem sehr langsamen, jedoch kontinuierlichen Anstieg des Druckabfalls im Filtersystem. Um diesem Anstieg entgegenzuwirken, wird als nächste Reinigungsstufe das Filtersystem bei Bedarf gespült. Dazu wird Frischwasser in den Filter eingetragen und so die einzelnen Bereiche des Siebes als auch der Behälterwand gespült. Wird ein überdurchschnittlicher Anstieg des Differenzdruckes über die zentrale Differenz-druckerfassungseinrichtung ermittelt, deutet dies auf eine sehr starke Verschmutzung des Arbeitskreislaufes hin, die sich in der Regel am Filterelement direkt niederschlägt. Das Filterelement wird gezogen und manuell, vorzugsweise mittels eines Hochdruckreinigers gesäubert. Dabei erfolgt die Säuberung aller Filter, da aus der Differenzdruckangabe keine Möglichkeit der Erkennbarkeit der Verschmutzung eines einzelnen Filters besteht.

Bei diskontinuierlichem Rückstand-Abzug wird ferner, wie bereits ausgeführt, eine Rückstand-Schleuse verwendet. Diese besteht üblicherweise aus einer Rückstand-Kammer, der ein Einlassventil und ein Auslassventil zugeordnet ist, wobei ferner zwischen Einlassventil und Auslassventil in die Rückstand-Kammer eine Spülarmatur ankoppelbar ist. Im einfachsten Fall wird die Kammer baulich nicht als Kammer ausgeführt, sondern diese Funktion wird von der Verbindungsleitung zwischen den beiden Ventilen, Einlassventil und Auslassventil, gebildet. In diesem Fall sind die beiden Ventile - Einlassventil und Auslassventil - in vertikaler Richtung untereinander angeordnet. Zum Eintrag des Rückstandes in die Rückstand-Kammer und damit zum Austrag aus dem Behälter des Filters öffnet die Ventileinrichtung den Einlass für eine vordefinierte Zeitdauer, während die anderen Ventileinrichtungen geschlossen bleiben. Durch das Öffnen gelangt der Rückstand in die Rückstand-Kammer, die der Auslassventileinrichtung vorgelagert ist. Ist diese gefüllt oder möchte man den Rückstand ablassen, wird die Einlassventileinrichtung geschlossen und die Auslassventileinrichtung öffnet für eine vordefinierte Zeitdauer und gibt die Ablaufleitung in eine entsprechende Auffangeinrichtung frei. Zum Spülen der Rückstand-Kammer und der Filtereinrichtung wird die Einlassventileinrichtung geschlossen, die Auslassventileinrichtung der Rückstand-Kammer geöffnet und kurzzeitig die Spülarmatur an die Rückstand-Kammer angeschlossen, das heißt die entsprechende Ventileinrichtung betätigt. Um Druckschwankungen beim Einlassen des Rückstandes, der in Fachkreisen als Reject bezeichnet wird, in die Rückstand-Kammer zu verhindern, wird vor dem Einlass des Rückstandes aus der Filterkammer in die Rückstand-Schleuse das Einlassventil der Rückstand-Schleuse geschlossen, während die Spülarmatur angeschlossen wird und über diese Fluid, insbesondere Wasser eingetragen wird. Die Auslassventil-einrichtung schließt, wobei nach dem Schließen der Auslassventi-leinrichtung zeitlich versetzt die Spülarmatur abgeschaltet wird. Auch bei Ausführung mit einem entsprechenden Wassereintrag in die Rückstand-Kammer sind störende Druckschwankungen und ein Lufteintrag beim Eintrag des Rückstandes in die Rückstand-Kammer zu beobachten. Ferner kann es zur Entstehung eines undefinierten Überdruckes in der Schleuse nach Einlassen des Wassers kommen, da eventuell noch komprimierte Restluft in der Schleuse vorhanden ist. Der Eintrag von Wasser in die Rückstand-Kammer bewirkt ferner unter Umständen einen Eintrag von Wasser in das filtrierte Auftragsmedium, da der Rückstand schwerer als Wasser ist und damit das Wasser in den Gutstoff gedrückt wird. Es kommt somit zu einer ungewollten, unter Umständen auch problematischen Verdünnung des filtrierten Auftragsmediums und damit des Gutstoffes, so dass hier die Anforderungen an eine entsprechende Strichqualität nicht mehr gewährleistet sind.

Der Erfindung liegt daher die Aufgabe zugrunde, den Verschmutzungsgrad eines einzelnen Filters bei Parallelschaltung von mindestens zwei Filtern und dem Vorhandensein einer zentralen Filterüberwachung für den Differenzdruck am Einlauf und Auslauf des Filtersystems zu diagnostizieren.

Die erfindungsgemäße Lösung ist durch die Merkmale des Ansprüches 1 charakterisiert. Vorteilhafte Ausgestaltungen sind in den Unteransprüchen beschrieben.

Erfindungsgemäß wird ein Verfahren zur Erkennung des Verschmutzungsgrades einer einzelnen Filtereinrichtung bei Parallelschaltung von mindestens zwei einzelnen Filtereinrichtungen in einem Filtersystem mit einer zentralen Einrichtung zur Überwachung des Differenzdruckes im Zulauf und Ablauf des Filtersystems als präventive Maßnahme zu Diagnosezwecken vorgeschlagen. Dabei wird ein aus dem Stand der Technik bekanntes herkömmliches Differenzdrucküberwachungssystem für die Ermittlung des Differenzdruckes zwischen einer zentralen Zulaufleitung zur Filteranlage und der Gutstoffleitung bzw. Ablaufleitung als Bestandteil eines Diagnosesystems genutzt, wobei hier zusätzlich weitere Parameter erfasst werden, die die Betriebsweise im Filtersystem beschreiben. Dazu werden im wesentlichen nachfolgend genannte Parameter fortlaufen oder zumindest zeitweise erfasst:
- aktueller Ist-Volumenstrom des Auftragsmediums zum Filtersystem bzw. der Filteranlage für das Auftragsmedium
- Erfassung des Druckes in der zentralen Zulaufleitung oder zumindest eine, diesen wenigstens mittelbar charakterisierende Größe
- Ventilstellung der einzelnen Ventileinrichtungen in der Zulaufleitung zu den einzelnen Filtereinrichtungen, insbesondere Öffnungsquerschnitt, Stellweg e.t.c.

Aus diesen Größen lässt sich durch eine entsprechende Auswertung der Zustand des Filtersystems ermitteln und auf den Zustand eines einzelnen Filters schließen, wobei in Abhängigkeit der Ventilstellungen Filterwechsel betroffener Filter während des Betriebes vorgenommen werden können oder aber zumindest ein entsprechender Hinweis auf den Verschmutzungsgrad, aus welchem die weiteren Maßnahmen abgeleitet werden können, gegeben werden kann. Dadurch wird es möglich, zum einen nur noch die tatsächlich zu reinigenden Filter zu reinigen und zum anderen die Reinigung sehr zeitnah und vor dem Eintreten unzulässiger Druckabfälle vorzunehmen.

Das erfindungsgemäße Verfahren für den Filteranlagen-Test bei n-Filtern läuft dabei im Grundsatz folgendermaßen ab:
1. Start
2. Volumenstromabfrage
3. Löschen der Anzeige der Speicherwerte für vorangegangene Sequenzen
4. Langsames Schließen des ersten Zulaufventils am ersten Filter mit gleichzeitiger kontinuierlicher Maximalwerterfassung des Druckes in der zentralen Zulaufleitung und Speicherung als Speicherwert p_{maxVE}
5. Gleichzeitig Überwachung des Streichfarbenvolumenstroms und der Druckdifferenz beim Schließen des Zulaufventils und Erfassen der aktuellen Ventilstellung bei Erreichen eines vordefinierten Durchsatzabfalls oder einer bestimmten maximal zulässigen Druckdifferenz zwischen Zulauf- und Ablaufleitung
6. Wiederholung der Schritte 4 und 5 für die weiteren n Filter
7. Auswertung und Anzeige der Speicherwerte:
   a1) Speicherwert Ventilstellungen VEST1 bis VESTn der einzelnen Ventileinrichtungen VEn sind unterschiedlich und kein Wert entspricht einer Ventilstellung von 0% (komplett geschlossen)
      Meldung: Filterreinigung im aktuellen Betriebszustand nicht möglich Anzeige Verschmutzungsgrad :
      Kleinster Speicherwert für die Ventilstellung → stärkste Verschmutzung, mittlerer Speicherwert für die Ventilstellung → mittlere Verschmutzung und größter Speicherwert für die Ventilstellung →kleinste Verschmutzung
   a2) Speicherwerte Ventilstellungen Ventil VE1 bis Ventil VEn VEST1 ≠ VEST2....≠ VESTn und ein Wert für VEST= 0 % der Filter mit dem kleinsten Speicherwert für die Ventilstellung ist am meisten verschmutzt und ist zuerst zu reinigen
      die Filter mit den mittleren Speicherwerten sind in der Reihenfolge der Größewerte der Ventilstellungen als nächstes zu reinigen der Filter mit dem größten Speicherwert ist als letzter zu reinigen.
   b1) Sind zwei oder mehrere der Speicherwerte "Ventilstellung" für die einzelnen Ventileinrichtungen identisch, jedoch nicht alle und kein Wert VEST = 0 % und die identischen Speicherwerte für die Ventilstellung sind größer als der abweichende Speicherwert Ventilstellung (z.B. Ventilstellung Ventil 1 = 20 %, Ventilstellung Ventil 2 = 20 %, Ventilstellung Ventil 3=10%)
      - Meldung: Eine Filterreinigung im aktuellen Betriebszustand nicht möglich.
      - auf Null-Setzen des Speicherwertes für den Maximaldruck p_{maxVE} des Filters mit dem abweichenden Speicherwert Ventilstellung, danach
      - Vergleich der Speicherwerte für den max Druck p_{maxVE1} bis max. Druck p_{maxVE} -Anzeige:
         kleinster Speicherwert max. Druck p_{maxVE} → stärkste Verschmutzung
         mittlerer Speicherwert max. Druck p_{maxVE} → mittlere Verschmutzung
         größter Speicherwert max. Druck p_{maxVE} → kleinste Verschmutzung
   b2) Sind zwei oder mehrere der n Speicherwerte für die Ventilstellung VEST identisch und kein Wert VEST = 0 % und sind die identischen Speicherwerte für die Ventilstellung kleiner als der abweichende Speicherwert für die Ventilstellung (z.B. Ventilstellung Ventil 1 = 10 %, Ventilstellung Ventil 2 = 10 %, Ventilstellung Ventil 3 = 20 %), dann
      - Meldung: Filterreinigung im aktuellen Betriebszustand nicht möglich.
      - auf Null Setzen des max. Druck Speicherwertes p_{maxVE} des Filters mit dem abweichenden Speicherwert für die Ventilstellung
      - Vergleich der Speicherwerte max. Druck p_{maxVE1} bis max. Druck p_{maxVEn}
      - Anzeige:
         mittlerer Speicherwert max. Druck → stärkste Verschmutzung
         größter Speicherwert max. Druck → mittlere Verschmutzung
         kleinster Speicherwert max. Druck → kleinste Verschmutzung
   b3) Sind zwei oder mehrere der n Speicherwerte für die Ventilstellungen der n Ventile identisch und ein Wert für VEST = 0 % und sind die identischen Speicherwerte für die Ventilstellungen > als der abweichende Speicherwert für die Ventilstellung (z.B. Ventilstellung Ventil 1 = 10 %, Ventilstellung Ventil 2 = 10 %, Ventilstellung Ventil 3 = 0 %), dann
      - auf Null Setzen des max. Druck Speicherwertes p_{maxVE} des Filters mit dem abweichenden Speicherwert Ventilstellung
      - Vergleich der Speicherwerte max. Druck p_{maxVE1} bis max. Druck p_{maxVEn}
      - Anzeige:
         Der Filter mit dem kleinsten Speicherwert Ventilstellung ist am meisten verschmutzt und ist zuerst zu reinigen. Der Filter mit dem mittleren
         Speicherwert ist als zweites zu reinigen. Der Filter mit dem größten
         Speicherwert ist als drittes zu reinigen
   c) Sind alle Speicherwerte der n Ventile für die Ventilstellung identisch (z.B. Ventilstellung Ventil 1 = 0 %, Ventilstellung Ventil 2 = 0 %, Ventilstellung Ventil 3 = 0 %), Vergleich der Speicherwerte max. Druck p_{maxVE1} bis max. Druck p_{maxVEn}. Der Filter mit dem kleinsten Speicherwert max. Druck ist am meisten verschmutzt und ist zuerst zu reinigen. Der Filter mit dem mittleren Speicherwert max. Druck ist als zweites zu reinigen. Der Filter mit dem größten Speicherwert max. Druck ist als drittes zu reinigen.

Der Filter-Test kann für jeweils wenigstens zwei Filtereinrichtungen einer Filteranlage durchgeführt werden. Die Diagnoseinformation kann dann vom Bedienpersonal entsprechend umgesetzt werden.

Die erfindungsgemäße Lösung wird nachfolgend anhand von Figuren erläutert. Darin ist im einzelnen folgendes dargestellt:
- Figur 1: verdeutlicht in schematisiert vereinfachter Darstellung den Aufbau eines Filterkreislaufsystems für eine Aufbereitungsanlage für Streichfarbe;
- Figur 3: verdeutlicht in schematisiert vereinfachter Darstellung anhand eines Signalflussbildes den Ablauf eines erfindungsgemäßen Verfahrens zur Erkennung des Verschmutzungsgrades eines einzelnen Filters bei Parallelschaltung von mindestens zwei Filtern;
- Figuren 4a bis 4c: verdeutlichen Prozessabläufe gemäß Figur 3;
- Figuren 5a bis 5e: verdeutlichen anhand von Signalsflussbildern die Prozessabläufe zur Auswertung der in den Unterprozessen gemäß der Figuren 4a bis 4c ermittelten Kenngrößen;

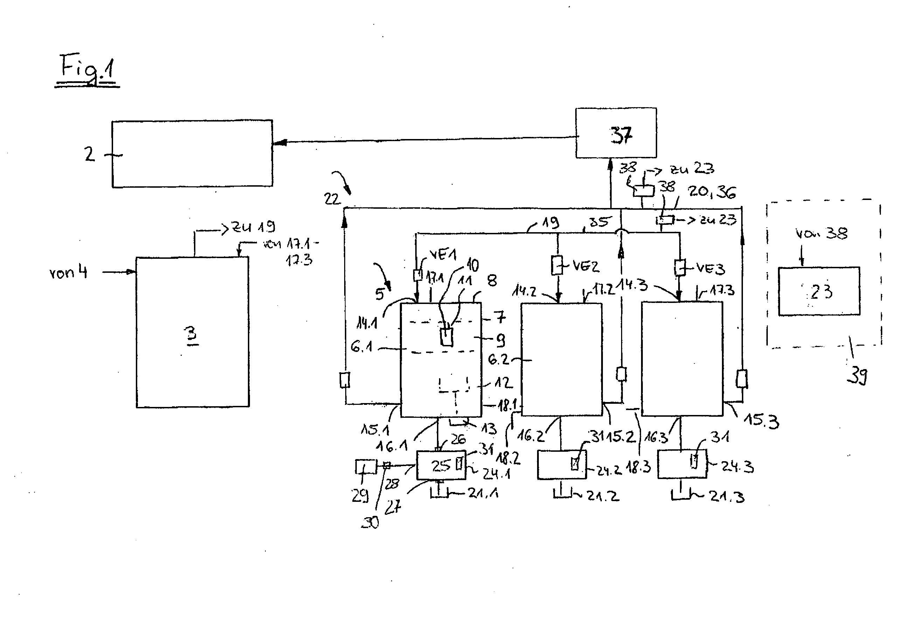

Die Figur 1 verdeutlicht in schematisiert vereinfachter Darstellung den Grundaufbau eines Aufbereitungssystems 1 für Auftragsmedien, insbesondere Pigmente und anorganische Zusätze enthaltende Dispersionen, wie beispielsweise für ein Auftragswerk 2, umfassend mindestens ein Auftragsaggregat. Das Aufbereitungssystem 1 umfasst dabei im wesentlichen einen so genannten Arbeitsbehälter 3, der aus einem Vorratsbehälter 4 gespeist wird. Zur Bereitstellung des Auftragsmediums frei von Störstoffen am Auftragswerk 2 sind entsprechende, auf das Auftragsmedium einwirkende Einrichtungen zwischen Arbeitsbehälter 3 und Auftragswerk 2 zwischengeschaltet. Zu diesen gehört eine Filteranlage 5, welche wenigstens einen Filter 6, vorzugsweise eine Mehrzahl von parallel zueinander angeordneten und geschalteten Filtern 6.1 bis 6.n, hier beispielhaft drei Filter 6.1 bis 6.3 umfasst. Der einzelne Filter 6.1 bis 6.n dient dabei der Trennung von Medien, insbesondere der Abtrennung von Störstoffen aus dem Auftragsmedium. Diese können verschiedenartig ausgebildet sein, beispielsweise in Form von Druck- oder Schwerkraftfiltern. Die treibende Trennkraft einer Filtration ist dabei stets eine Druckdifferenz, die durch Unter- oder durch Überdruck erzeugt wird. Die Funktionsprinzipien derartiger Filter sind allgemein bekannt, weshalb hier im Detail nicht weiter darauf eingegangen wird. Der einzelne Filter 6, hier nur für 6.1 stark schematisiert angedeutet, besteht dabei beispielsweise aus einem Behälter 7, Deckel 8, einem Filterelement 9, beispielsweise in Form einer Siebtrommel sowie einem Verdrängungskörper 10 mit einem Reinigungselement 11, beispielsweise in Form eines federbelasteten Schabermechanismus 11, einem sogenannten Rückstand-Rührwerk 12 und einem Antrieb 13. Der einzelne Filter 6.1 bis 6.n weist eine Mehrzahl von Anschlüssen auf. Dazu gehören zumindest ein erster Anschluss 14, für die einzelnen Filter mit 14.1 bis 14.3 bezeichnet, der der Zufuhr des zu filtrierenden Auftragsmediums dient. Ein weiterer zweiter Anschluss 15 an jedem Filter 6.1 bis 6.3, hier mit 15.1 für den Filter 6.1 beziehungsweise 15.2 für den Filter 6.2 und 15.3 für den Filter 6.3 bezeichnet, dient der Ausgabe des gefilterten Auftragsmediums, des so genannten Gutstoffes. Dieser wird im dargestellten Ausführungsbeispiel über eine Entlüftungseinrichtung 37 zum Auftragswerk 2 geführt. Ein weiterer dritter Anschluss 16.1 bis 16.3, dient dem Auslass von Rückstand und wird daher als Rückstand-Auslass bezeichnet. Weitere Anschlüsse 17.1 bis 17.3 dienen der Entlüftung, 18.1 bis 18.3 der Reinigung und Spülung. Die Zufuhr zum einzelnen Filter 6.1 bis 6.3 erfolgt dabei vorzugsweise über eine zentrale Zufuhrleitung 19, die mit den einzelnen Anschlüssen 14.1 bis 14.3 an den einzelnen Filtern 6.1 bis 6.3 verbindbar ist. In Analogie dazu erfolgt der Austrag des Gutstromes und die Zufuhr zum Auftragswerk 2 über eine zentrale Gutstoffleitung 20, quasi durch Kopplung der einzelnen Verbindungsleitungen mit den einzelnen Anschlüssen 15.1 bis 15.n. Der Anschluss 16.1 bis 16.3 für den Rückstand-Auslass ist mit einer entsprechenden Einrichtung zum Auffangen des Rückstandes, hier mit der Auffangeinrichtung 21.1 bis 21.3 gekoppelt. Die Funktionsweise der bekannten Filteranlage 5 und des mit diesem gekoppelten Kreislaufsystems 22, welches die einzelnen Leitungssysteme umfasst, gestaltet sich dabei wie folgt: Das Auftragsmedium als Prozessflüssigkeit wird über entsprechende Verteileinrichtungen VE1, VE2, VE3, bei welchen es sich vorzugsweise um Steuer- oder Regelventile, besonders bevorzugt um Proportionalventile handelt, im oberen Bereich des jeweiligen Filters 6.1 bis 6.3 zugeführt und durchströmt dabei das Filterelement 9, wobei bei Ausführung als Siebtrommel diese je nach Bauart des Filters von innen nach außen oder von außen nach innen umströmt wird. Das gefilterte Auftragsmedium verlässt den jeweiligen Filter 6.1 bis 6.3 in der Regel über den am unteren Ende des Filters 6.1 bis 6.3 angeordneten weiteren zweiten Anschluss 15.1 bis 15.3, dem sogenannten Gutstoffanschluss. Zur Erkennung von Funktionsstörungen in der Filteranlage 5 ist dieser eine Einrichtung 23 zur zumindest zeitweise, vorzugsweise fortlaufenden Differenzdrucküberwachung über den Filtern 6.1 bis 6.3 zugeordnet. Diese dient der Erkennung des Verschmutzungsgrades in der Filteranlage 5 durch Überwachung des Differenzdruckes p_{d} aus dem Druck pₑ in der Zufuhrleitung 19 und dem Druck pₐ in der Gutstoffleitung 20. Dabei werden die Drücke entweder direkt erfasst oder durch diese wenigstens mittelbar charakterisierende Größen bestimmt, beispielsweise mittels Erfassungseinrichtungen 38. Eine Reinigung erfolgt dann je nach Verschmutzungsgrad und Betriebszustand in Stufen. Gemäß einer ersten Stufe erfolgt eine kontinuierliche Reinigung der Siebtrommelinnenseite mittels des Reinigungselementes 11, insbesondere dem Schaber, die zweite Stufe ist durch den Rückstand-Abzug über 16.1 bis 16.n gekennzeichnet. Die dritte Stufe beinhaltet die Spülung des Filters 6.1 bis 6.n. Die vierte Stufe ist durch die Herausnahme des Filterelementes 9 und dessen manuelle Reinigung charakterisiert. Um einen möglichst geringen Druckabfall über einen langen Betriebszeitraum im System zu ermöglichen, wird die Zurückhalteseite für den Rückstand am Filterelement 9, die Rückstand-Seite der Siebtrommel kontinuierlich mit Schabern oder anderen Reinigungseinrichtungen gereinigt. Zur Optimierung der Reinigungswirkung kann die Drehrichtung des Reinigungselementes gewechselt werden. Der Rückstand, das heißt die Störstoffe im Auftragsmedium, die durch das Filterelement abgetrennt werden, sammelt sich in einer Rückstand-Kammer, in der Regel am Boden des Behälters 7.1 bis 7.n und werden von dort kontinuierlich oder alternativ diskontinuierlich entfernt. Um den diskontinuierlichen Rückstand-Abzug während des laufenden Betriebes des Aufbereitungssystems 1 zu gewährleisten, ist üblicherweise eine sogenannte Rückstand-Schleuse, hier 24.1 bis 24.3 vorgesehen, die zwischen dem Rückstand-Auslass 16.1 bis 16.n und den entsprechenden Auffangeinheiten 21.1 bis 21.3 angeordnet. Ist. Dabei kommt es in der Regel trotz der Beschaberung und der Rückstand-Ausschleusung zu einem langsamen, jedoch kontinuierlichen Anstieg des Druckabfalls in der Filteranlage 5. Um diesem Anstieg entgegenzuwirken, wird das Filtersystem 5 bei Bedarf gespült. Sollte es aufgrund einer starken Verschmutzung des Arbeitskreislaufes zu einem überdurchschnittlichen Anstieg des Differenzdruckes p_{d} kommen, ist das Filterelement 9 zu ziehen und manuell beispielsweise mittels Hochdruckreiniger zu säubern. Ferner ist es erforderlich zur Realisierung eines einwandfreien Filterbetriebes, die mit der Prozessflüssigkeit, das heißt dem Auftragsmedium eingeschleppte Luft kontinuierlich zu entfernen, was über eine Entlüftungsleitung, hier die Anschlüsse 17.1 bis 17.3 erfolgt. Die dabei über die Entlüftungsleitung mit entweichende Arbeitsflüssigkeit muss in den Arbeitsbehälter zurückgeführt werden.

Die Rückstand-Schleuse 24.1 bzw. 24.n umfasst dabei zumindest eine Rückstand-Kammer 25, einen Einlass, insbesondere ein Einlassventil 26 und einen Auslass, insbesondere ein Auslassventil 27, wobei Einlassventil 26 und Auslassventil 27 mit der Rückstand-Kammer 25 quasi in Reihe geschaltet sind und ferner einen Anschluss 28 zur Kopplung mit einer Spülarmatur 29 vorgesehen ist, wobei der Anschluss zwischen den Ventileinrichtungen, insbesondere Einlassventil 26 und Auslassventil 27, angeordnet ist. Die Funktion gestaltet sich dabei wie folgt: Zum Einlass des Rückstandes R wird das Einlassventil für eine vordefinierte Zeitdauer geöffnet, während das Auslassventil sowie der Anschluss zur Spülarmatur 29 geschlossen sind. Die Rückstand-Kammer 25 wird befüllt. Zum Ablassen des Rückstandes wird der Einlass, insbesondere das Einlassventil 26, geschlossen, während der Anschluss für die Spülarmatur 29 ebenfalls geschlossen und das Auslassventil 27 für eine vordefinierte Zeitdauer t geöffnet werden. Der Rückstand gelangt aus der Rückstand-Kammer 25 in die Auffangeinheit 21. Zum Spülen wird der Einlass und damit das Einlassventil 26 zur Rückstand-Kammer 25 verschlossen, während der Auslass 27 sowie der Anschluss 28 zur Spülarmatur geöffnet sind. Die auftretenden Druckschwankungen in der Rückstand-Schleuse, die sich auch auf die Arbeitsweise der Filtereinrichtungen niederschlagen können, können zu Störungen führen. Gemäß einer Ausführung aus dem Stand der Technik wird daher vorgeschlagen, zusätzliches Fluid vor dem Einlass des Rückstandes R in die Rückstand-Kammer 25 einzutragen. Dies wird als so genannte Wasservorlage bezeichnet. Dazu wird die Spülarmatur 29 genutzt. Die Ventileinrichtung 30 der Spülarmatur 29 wird geöffnet, während das Auslassventil 27 langsam schließt, wobei sich im Anschluss daran die Ventileinrichtung 30 ebenfalls schließt. Um den durch die Wasservorlage bedingten undefinierten Überdruck in der Rückstand-Schleuse 24 sowie die störenden Druckschwankungen und den Lufteintrag zu reduzieren, wird erfindungsgemäß vorgeschlagen, die einzelne Rückstand-Schleuse 24.1 bis 24.n mit einer zusätzlichen Einrichtung 31 zur Entlüftung der Rückstand-Kammer 25 vorzusehen. Dies kann erfindungsgemäß auf unterschiedliche Art und Weise erfolgen.

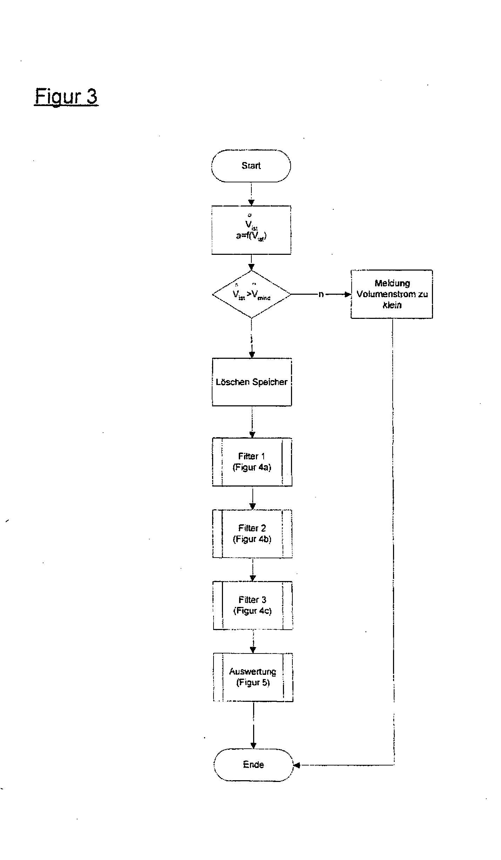

Eine Maßnahme zur Optimierung der Betriebsweise eines Filtersystems 5 ist durch ein Verfahren zur Diagnose, d.h. Erkennung des Verschmutzungsgrades eines einzelnen Filters 6.1 bis 6.n bei Parallelschaltung wenigstens zweier derartiger Filter 6.1 und 6.2 auf der Grundlage der Überwachung des Differenzdruckes zwischen der Zulaufleitung 19 und der Gutstoffleitung 20 und damit des Einlasses 35 und des Auslasses 36 des Filtersystems 5 charakterisiert. Diese werden von der Zulaufleitung 19 und der Gutstoffleitung 20 gebildet. Dazu ist ein entsprechendes Überwachungssystem 39, welches in Figur 1 angegeben ist und die Einrichtung 23 zur Ermittlung des Differenzdruckes umfasst, vorgesehen. Das Verfahren dient dabei der Erkennung der Verschmutzung eines Filters 6.1 bis 6.n in einem Filtersystem 5 und der Bereitstellung der Möglichkeit zum Filterwechsel gerade dieses Filters während des laufenden Betriebes. Das erfindungsgemäße Verfahren wird dabei anhand eines Signalflussbildes in den Figuren 3 bis 5 wiedergegeben. Dazu wird gemäß Figur 3 der "Filter-Test" gestartet. Es schließt sich eine Volumenstromabfrage an, in welcher wenigstens eine, den aktuellen Ist-Volumenstrom Vᵢₛₜ wenigstens mittelbar charakterisierende Größe, d.h. direkt oder indirekt über funktionale Zusammenhänge ermittelbar, erfasst wird und mit einem Sollwert für einen mindestens erforderlichen Volumenstrom V_{mind} verglichen wird. Ist dabei der aktuell erfasste Volumenstrom Vᵢₛₜ für das Auftragsmedium größer als der vordefinierte Mindestdurchfluss V_{mind}, wird eine Fehlermeldung ausgegeben, was vorzugsweise optisch und/oder akustisch erfolgen kann, in der darauf verwiesen wird, dass der aktuelle Volumenstrom Vᵢₛₜ des Auftragsmediums zu klein für die Durchführung eines Filtertests ist und der Filtertest wird beendet, beziehungsweise kann erneut gestartet werden.

Im anderen Fall, das heißt, wenn der aktuell erfasste Auftragsmediumvolumenstrom größer als der vordefinierte Mindestdurchfluss ist, werden die Speicherwerte des vorherigen Filter-Test, falls vorliegend, gelöscht und das Ventil VE1 im Zulauf 35 zum Filter, insbesondere einem Filter 1, der gemäß Figur 1 dem Filter 6.1 entsprechen könnte, langsam über einen längeren Zeitraum geschlossen. Zur Vereinfachung werden die Filter nachfolgend mit Filter 1, Filter 2 und so weiter bezeichnet. Diese entsprechen beispielsweise den Filtern 6.1, 6.2 und so weiter gemäß einer Ausführung von Figur 1.

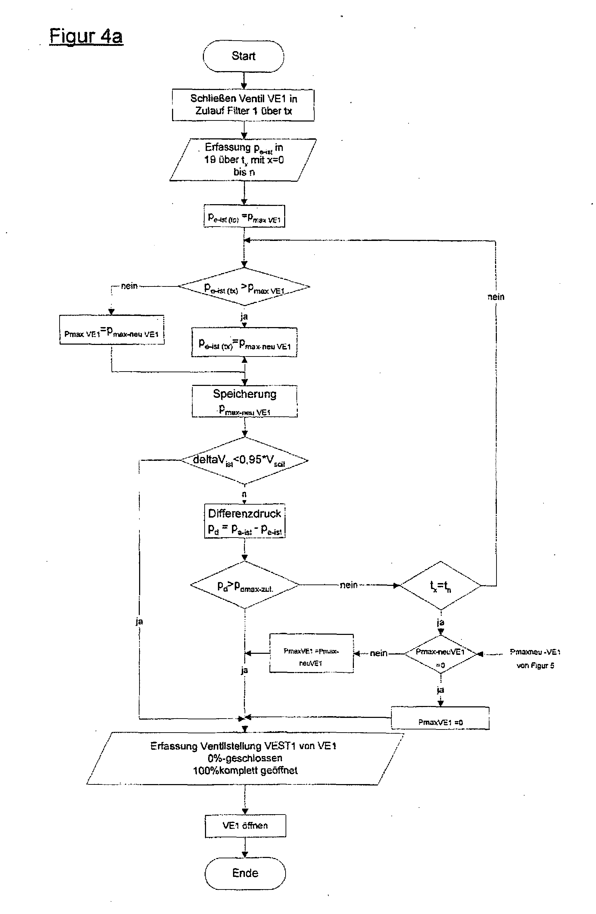

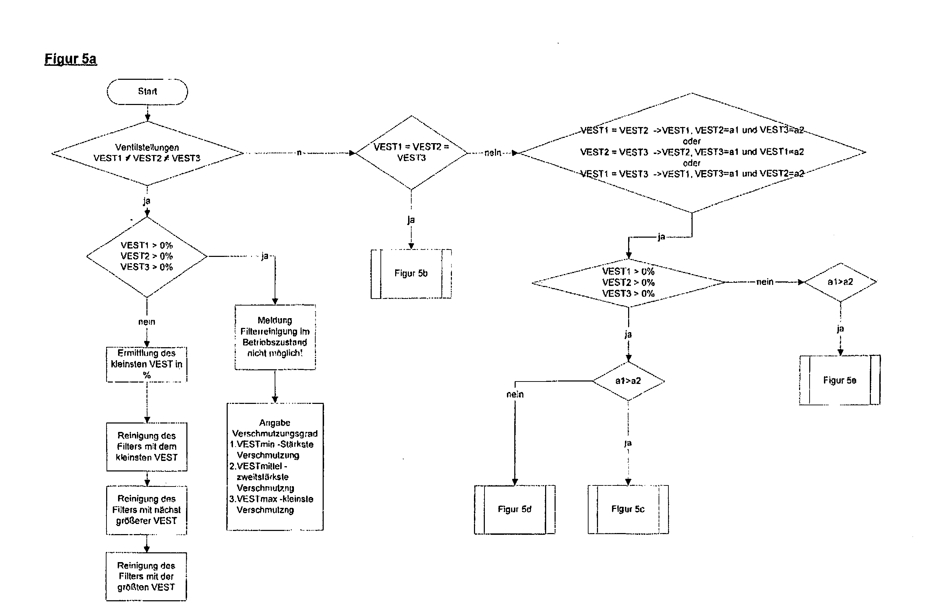

Im Anschluss daran werden die einzelnen Filter 1 bis 3 während des Testes jeweils nacheinander in Unterverfahren, die in den Figuren 4a bis 4c wiedergegeben sind, geschlossen und die Druckwerte in der Zulaufleitung 19 und die Ventilstellungen VEST der einzelnen Ventileinrichtungen VE1 bis VE3 ermittelt und ausgewertet, wie in den Figuren 5a bis 5d wiedergegeben.

Das Schließen der Ventileinrichtung VE1 kann dabei kontinuierlich erfolgen. Das Verfahren und die Überwachung der für die Auswertung im Zusammenhang mit Filter 1 stehenden Größen ist in Figur 4a dargestellt. Der Zeitraum tₓ mit x=0 bis n beträgt beispielsweise bis zu einer Minute. Gleichzeitig wird während des Schließvorganges des Zulaufventils VE1 am Filter 1 der Druck pₑ₋ᵢₛₜ in der zentralen Zulaufleitung 19 erfasst und der Maximalwert p_{maxVE1} in der Zulaufleitung 19 bei Schließen von VE1 bestimmt, wobei dieser als pₘₐₓ₋ₙₑᵤ erfasst und vorzugsweise abgespeichert wird und wobei während der fortlaufenden Maximalwerterfassung des Druckes p_{maxVE1} der Volumenstrom Vᵢₛₜ des Auftragsmediums zur Filteranlage 5 und die Druckdifferenz p_{d} an der Filteranlage 5, das heißt zwischen der zentralen Zulaufleitung 19 und der zentralen Gutstoffleitung 20, ermittelt wird. Dabei wird erneut der Ist-Volumenstrom Vᵢₛₜ für das Auftragsmedium erfasst und mit einem Sollwert Vₛₒₗₗ verglichen. Sinkt dieser beim Schließen des Zulaufventils VE1 um mehr als einen bestimmten Prozentsatz, insbesondere 5% unter den vordefinierten Sollwert Vₛₒₗₗ ab oder übersteigt beim Schließen des Zulaufventils VE1 der Differenzdruck p_{d} am Filtersystem 5 den vom Filterhersteller erlaubten vorgegebenen Maximalwert **p**_{dmax-zul}. wird eine, die aktuelle Ventilstellung VEST1 wenigstens mittelbar charakterisierende, Größe erfasst und gleichzeitig das Zulaufventil VE1 am ersten Filter 1 langsam geöffnet. Die Ventilstellung charakterisiert dabei beispielsweise den Öffnungsgrad in %, d.h. 0% entspricht einer kompletten Schließung der Ventileinrichtung VE1, 100% entspricht der kompletten Freigabe des Ventilquerschnittes. Zur Charakterisierung dieser Größe können auch andere, diese Größe beschreibende Größen erfasst werden.

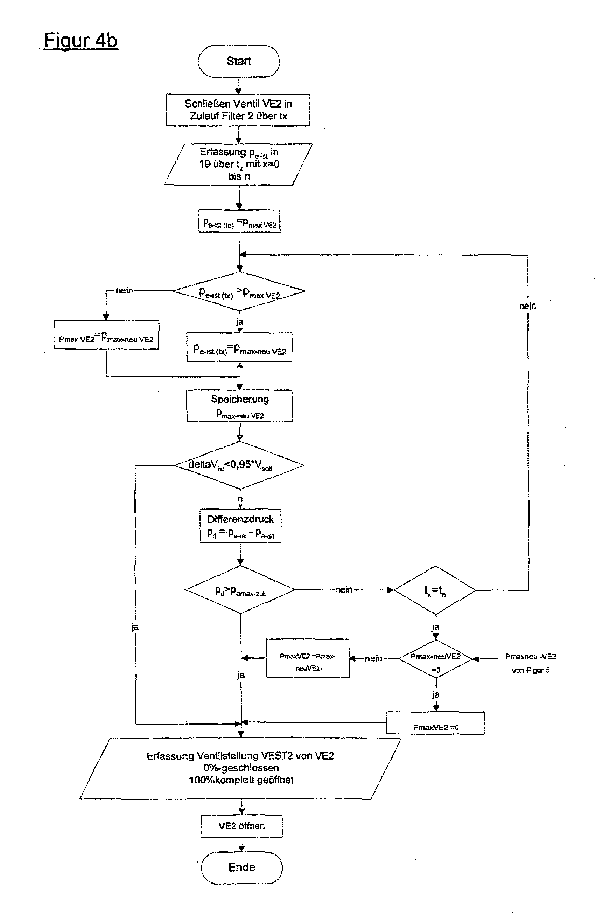

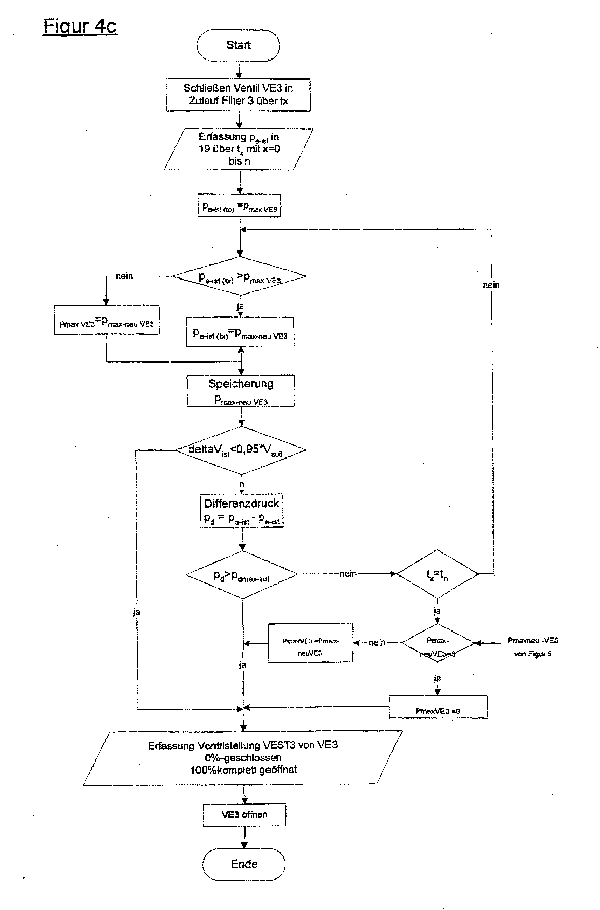

Der Öffnungsvorgang erfolgt ebenfalls über eine längere Zeitdauer, vorzugsweise ca. 1 min. Dieses in Figur 4a dargestellte Verfahren wird dann mit dem Filter 2 und im Anschluss daran dem Filter 3 wiederholt. Die Verfahren sind in den Figuren 4b und 4c dargestellt. Im Anschluss daran erfolgt eine Auswertung und gegebenenfalls Anzeige der Ergebnisse, wie in den Figuren 5a bis 5e erläutert. Dabei werden die einzelnen Speicherwerte der Ventilstellungen VEST1, VEST2, VEST3 für die Ventile VE1, VE2 und VE3 verglichen und als erstes überprüft, ob alle Ventileinrichtungen oder nur ein Teil der Ventileinrichtungen VE1 bis VE3 oder für gar keine gleiche Ventilstellungsgrößen VEST ermittelt wurden.

Bei Ungleichheit aller während der Ventilschließung an den einzelnen Filtern 1 bis 3 ermittelten Ventilstellungen VEST1 bis VEST3 wird geprüft, ob eine der Ventileinrichtungen vollständig geschlossen war. War keine dieser Ventileinrichtungen VE1 bis VE3 komplett geschlossen ist, wird eine Meldung erzeugt, dass eine Filterreinigung im aktuellen Betriebszustand nicht möglich ist. Es besteht die Möglichkeit einer Anzeige, Ausgabe und/oder Speicherung der daraus ableitbaren Angabe zum Verschmutzungsgrad. Für den Filter mit dem Ventil VE mit dem ermittelten kleinsten Speicherwert VEST für die Ventilstellung wird die stärkste Verschmutzung diagnostiziert, der Filter mit der Ventileinrichtung VE mit dem mittleren Speicherwert für die Ventilstellung VEST ist durch eine mittlere Verschmutzung charakterisiert, während der Filter mit dem zugehörigen Ventil VE mit dem größten Speicherwert VEST für die Ventilstellung den kleinsten Verschmutzungsgrad aufweist. Die Filterreinigung ist dann nach Möglichkeit bei nächstmöglicher Außerbetriebnahme der Anlage vorzunehmen.

Ergibt der Vergleich der Ventilstellungen VEST der Ventile VE1 Bis VE3, dass zumindest eines der Ventile VE1 bis VE3 komplett geschlossen war, so wird als Ergebnis ausgegeben, dass der Filter mit dem kleinsten Speicherwert VEST für die Ventilstellung am meisten verschmutzt ist und zuerst gereinigt werden muss. Die Reinigung kann während des Betriebes erfolgen. Der Filter mit dem nächst größeren Speicherwert VEST ist zweites zu reinigen und der Filter mit dem größten Speicherwert VEST zuletzt.

Sind zwei der drei Speicherwerte Ventilstellung VEST für die einzelnen Ventileinrichtungen VE1, VE2, VE3 identisch, d.h. VEST1=VEST2 oder VEST2=VEST3 oder VEST1=VEST3 und keines dieser Ventile VE1 bis VE3 war komplett geschlossen und die identischen Speicherwerte VE1=VE2=a1 oder VE2=VE3=a1 oder VE1=VE3=a1 für die Ventilstellung sind größer als der jeweils abweichende Speicherwert a2, der entsprechend der Falluntergruppen der Ventilstellung VEST3, VEST1 oder VEST2 entspricht (zum Beispiel eine der Ventileinrichtungen VE1 ist zu 20 % geöffnet, die Ventilstellung VEST2 des zweiten Ventils VE2 beträgt ebenfalls 20 %, während die Ventilstellung VEST3 des dritten Ventils VE3 nur 10 %beträgt) wird eine Meldung ausgegeben, dass eine Filterreinigung im aktuellen Betriebszustand nicht möglich ist und der Speicherwert des maximalen Druckwertes p_{maxVE} des Filters mit dem abweichenden Speicherwert der Ventilstellung VEST, d.h. der Ventileinrichtung VE deren Ventilstellung =a2 ist, wird auf Null gesetzt, wobei danach die Speicherwerte für den maximalen Druck p_{maxVE1} bis p_{maxVE3} miteinander verglichen werden und hier der kleinste Speicherwert für p_{maxVE} die stärkste Verschmutzung, der mittlere Speicherwert eine mittlere Verschmutzung und der größte Speicherwert die kleinste Verschmutzung indiziert.

Liegen die gleichen Voraussetzungen vor, das heißt sind zwei der drei Speicherwerte für die Ventilstellung identisch und kein Wert für VEST beträgt 0% und die identischen Speicherwerte VEST=a1 für die Ventilstellung sind kleiner als der abweichende Speicherwert VEST=a2 für das weitere Ventil, zum Beispiel Ventilstellung VEST1 des ersten Ventils VE beträgt 10 %, Ventilstellung VEST2 des zweiten Ventils VE2 10 % und die Ventilstellung VEST3 des dritten Ventils VE3 beträgt 20 %, wird eine Meldung ausgegeben, dass eine Filterreinigung im aktuellen Betriebszustand nicht möglich ist und es erfolgt ein Zurücksetzen des maximalen Druckspeicherwertes p_{maxVE} des Filters mit der Ventileinrichtung VE mit dem abweichenden Speicherwert a2 für die Ventilstellung VEST. Im Anschluss daran schließt sich ein Vergleich der Speicherwerte für den Maximaldruck p_{maxVE1} bis p_{maxVE3} an, wobei der mittlere Speicherwert p_{maxVE-mittel} für den maximalen Druck p_{maxVE} auf die stärkste Verschmutzung hinweist, der größte Speicherwert p_{maxVE-max} auf eine mittlere Verschmutzung und der kleinste Speicherwert p_{maxVE-min} auf die kleinste Verschmutzung.

Werden zwei Speicherwerte der drei Speicherwerte für die Ventilstellung VEST als identisch ermittelt und für eine der Ventileinrichtungen VE1 bis VE3 wurde eine Ventilstellung VEST von 0% erfasst, und sind die identischen Speicherwerte, d.h. a1 für die Ventilstellung VEST größer als der abweichende Speicherwert a2 der Ventilstellung VEST, dann erfolgt ein auf Null-Setzen des maximalen Druckspeicherwertes p_{maxVE} des Filters mit der zugeordneten Ventileinrichtung VE dem abweichenden Speicherwert a2 für die Ventilstellung VEST. Danach schließt sich ein Vergleich der Speicherwerte für die maximalen Drücke p_{maxVE1} bis p_{maxVE3} an. Der Filter mit dem kleinsten Speicherwert der Ventilstellung VEST ist am meisten verschmutzt und ist zuerst zu reinigen. Der Filter mit dem mittleren Speicherwert VEST als zweites, der Filter mit dem größten Speicherwert für VEST als drittes.

Sind gemäß Figur 5a alle Speicherwerte für die Ventilstellung identisch, d.h. VEST1=VEST2=VEST3, zum Beispiel alle Ventilstellungen der Ventileinrichtungen VE1 bis VE3 betragen 0%, dann werden die maximalen Drücke p_{maxVE1} bis p_{maxVE3} verglichen. Der Filter mit dem kleinsten Speicherwert p_{maxVE-min} für die maximalen Drücke ist am meisten verschmutzt und ist zuerst zu reinigen. Der Filter mit der zugehörigen Ventileinrichtung mit dem mittleren Speicherwert p_{maxVE-mittel} ist als zweites, der Filter mit dem größten Speicherwert für den Maximaldruck p_{maxVE-max} als drittes zu reinigen.

Die Sequenz Filter-Test wird im Anschluss daran beendet und kann jederzeit wieder erneut aufgerufen werden.

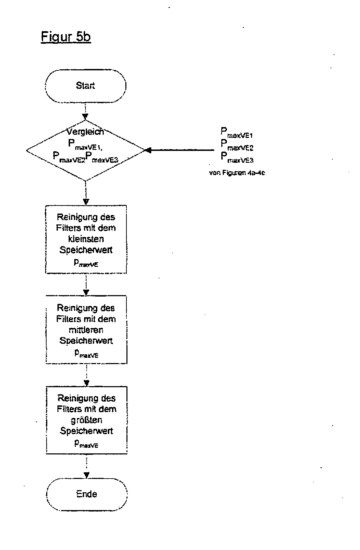

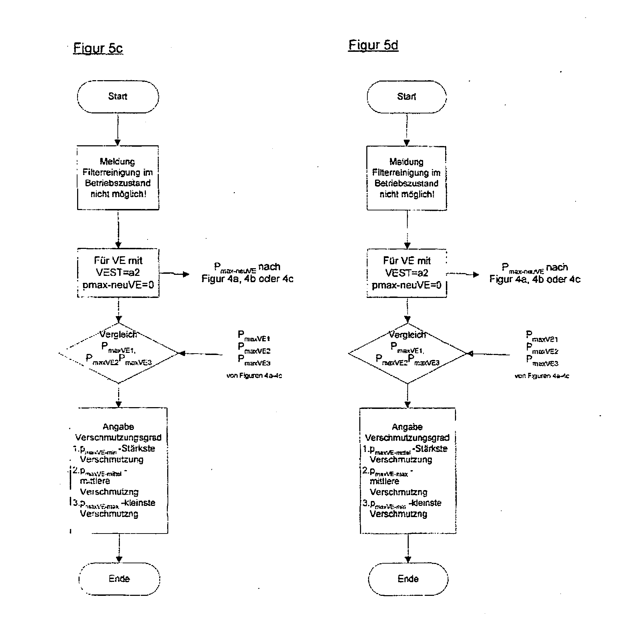

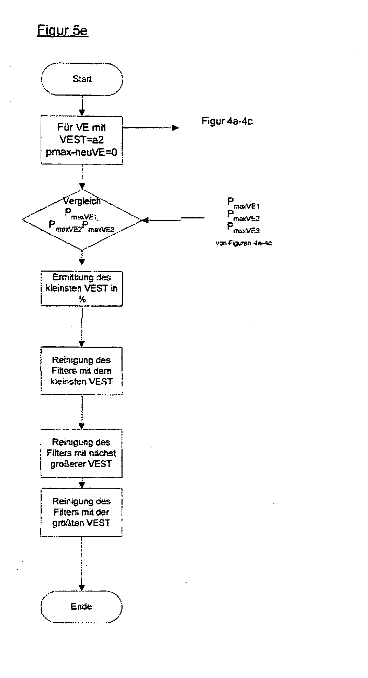

Die erfindungsgemäße Lösung gemäß Figur 4 und 5 ist dabei nicht auf die konkrete Ausführung der Filteranlage 5 gemäß Figur 1 beschränkt, sondern kann auf jede beliebige Ausführung gemäß dem Stand der Technik mit wenigstens zwei parallel geschalteten Filtern angewandt werden, insofern eine Differenzdrucküberwachung zwischen einem zentralen Zulauf 19 und einem zentralen Ablauf in Form der Auftragswerkversorgungsleitung 20 bzw. einer zentralen Gutstoffleitung möglich ist, und zusätzlich entsprechende Regelventile in den Verbindungsleitungen zwischen dem zentralen Zulauf 19 und dem Anschluss an den jeweiligen Filter vorgesehen sind.

Das erfindungsgemäße Verfahren gemäß der Figuren 3 bis 5 werden über Steuer- und/oder Regelvorrichtungen realisiert, vorzugsweise eine gemeinsame Steuervorrichtung, wobei es sich hierbei vorzugsweise um eine Steuervorrichtung für das gesamte Aufbereitungssystem 1 in Kombination mit dem Auftragswerk 2 handelt. Die Ventileinrichtungen VE1, VE2, VE3 im Zulauf zum Filter sowie die weiteren Ventileinrichtungen in den einzelnen Versorgungs- und Zuführleitungen sowie Ablaufleitungen dienen als Stellglieder zur Beeinflussung des Durchsatzes.

Die Bezeichnung "Ventil" bzw. "Ventileinrichtung" meint jede konstruktiv mögliche Ausführung zur Erzielung der Funktion.

### Bezugszeichenliste

- 1: Aufbereitungssystem
- 2: Auftragswert
- 3: Arbeitsbehälter
- 4: Vorratsbehälter
- 5: Filteranlage
- 6: Filter
- 6.1 - 6.n: Filter
- 7: Behälter
- 8: Deckel
- 9: Filterelement
- 10: Verdrängungskörper
- 11: federbelasteter Schaber
- 12: Rückstand-Rührwerk
- 13: Antrieb
- 14.1-14.n: erster Anschluss
- 15.1 - 15.n: zweiter Anschluss
- 16.1-16.n: dritter Anschluss
- 17.1 - 17.n: weiterer Anschluss
- 18.1 - 18.n: Anschluss
- 19: zentrale Zufuhrleitung
- 20: zentrale Gutstoffleitung oder Auftragswerkversorgungsleitung
- 21: Auffangeinheit
- 22: Kreislaufsystem
- 23: Einrichtung zur Ermittlung des Differenzdruckes
- 24: Rückstand-Schleuse
- 25: Rückstand-Kammer
- 26: Einlassventil
- 27: Einlassventil
- 28: Anschluss zur Kopplung mit einer Spülarmatur
- 29: Spülarmatur
- 30: Ventileinrichtung
- 31: Einrichtung zum Entlüften der Rückstand-Kammer
- 32: Entlüftungsöffnung
- 33: Entlüftungsleitung
- 34: Handventil
- 35: Zulauf
- 36: Ablauf
- 37: Entlüfter
- 38: Erfassungseinrichtungen
- 39: Diagnoseeinrichtung

## Patentansprüche

1. Verfahren zur Diagnose, insbesondere Erkennung des Verschmutzungsgrades einer einzelnen Filtereinrichtung (6.1, 6.2, 6.3) bei Parallelschaltung von mindestens zwei einzelnen Filtereinrichtungen (6.1, 6.2, 6.3) in einer Filteranlage (5) zur Filtrierung von Medien, insbesondere Auftragsmedien für Faserstoffbahnen, mit einer Einrichtung (23) zur Überwachung des Differenzdruckes zwischen einem Einlauf (35) und einem Auslauf (36) der Filteranlage (5), wobei der Einlauf (35) von einer zentralen Zufuhrleitung (19) gebildet wird, die über jeweils wenigstens eine Ventileinrichtung (VE1, VE2, VE3) mit den einzelnen Filtereinrichtungen (6.1, 6.2, 6.3) verbunden ist, **dadurch gekennzeichnet, dass**
a) an wenigstens zwei, vorzugsweise jeder Filtereinrichtung (6.1, 6.2, 6.3) nacheinander die Zufuhr von zu filtrierendem Medium durch Ansteuerung der dieser zugeordneten Ventileinrichtung (VE1, VE2, VE3) über eine vordefinierte Zeitdauer tx verringert bis vollständig unterbrochen wird und
- während dieser Zeitdauer tx kontinuierlich die Maximalwerte des Druckes pₘₐₓ in der zentralen Zulaufleitung (19) erfasst werden und für die Betätigung dieser Ventileinrichtung als Speicherwert p_{maxVE} gespeichert werden, wobei
- gleichzeitig die Größen des Volumenstroms und der Druckdifferenz p_{d} zwischen Einlauf (35) und Auslauf (36) erfasst werden und
- bei Erreichen eines vordefinierten Durchsatzabfalls oder
- einer bestimmten maximal zulässigen Druckdifferenz p_{dmax-zul} ein Wert für die aktuelle Ventilstellstellung (VEST1, VEST2, VEST3) erfasst wird und die Ventileinrichtung (VE1, VE2, VE3) wieder über eine vordefinierte Zeitdauer geöffnet wird;
b) bei welchem nach Abschluss von a) für die ermittelten Größen für die einzelnen Filtereinrichtungen (6.1, 6.2, 6.3) ein Auswertverfahren durchgeführt wird.

2. Verfahren nach Anspruch 1, **dadurch gekennzeichnet, dass** das Auswertverfahren folgende Verfahrensschritte umfasst:
Vergleich der Größe der ermittelten Ventilstellungen (VEST1, VEST2, VEST3) und bei Identität aller, Vergleich der Speicherwerte für die maximalen Druckwerte p_{maxVE1} bis p_{maxVEn}, welche bei Schließen der einzelnen Ventileinrichtungen (VE1, VE2, VE3) ermittelt wurden, wobei in Abhängigkeit der Größen für die Druckwerte p_{maxVE1} bis p_{maxVEn}, der Filter mit dem kleinsten Speicherwert für den maximalen Druck p_{maxVE} als der Filter mit der größten Verschmutzung, der oder die Filter mit den mittleren Speicherwerten in Abhängigkeit der Größe der Druckwerte nacheinander als zu reinigen und der Filter mit dem größten Speicherwert als der Filter mit der geringsten Verschmutzung diagnostiziert werden.

3. Verfahren nach Anspruch 1, **dadurch gekennzeichnet, dass** die ermittelten Ventilstellungen (VEST1, VEST2, VEST3) verglichen werden und bei Nichtvorliegen einer Identität der Größen und ein Nichtvorliegen eines Wertes einer Ventilstellung (VEST1, VEST2, VEST3), die dem eines geschlossenen Ventils entspricht, ein Hinweis ausgegeben wird, dass
- die Filterreinigung im aktuellen Betriebszustand nicht möglich ist und
- der Verschmutzungsgrad diagnostiziert wird, wobei der kleinste Speicherwert für die Ventilstellung der stärksten Verschmutzung, der mittlere Speicherwert für die Ventilstellung der mittleren Verschmutzung und
der größte Speicherwert für die Ventilstellung der kleinsten Verschmutzung entspricht.

4. Verfahren nach Anspruch 1, **dadurch gekennzeichnet, dass** die ermittelten Ventilstellungen (VEST1, VEST2, VEST3) miteinander verglichen werden und bei Nichtvorliegen einer Identität der Größen und Vorliegen eines Wertes einer Ventilstellung (VEST1, VEST2, VEST3), die dem eines geschlossenen Ventils entspricht, ein Verschmutzungsgrad diagnostiziert wird, wobei der kleinste Speicherwert für die Ventilstellung der stärksten Verschmutzung, der mittlere Speicherwert für die Ventilstellung einer mittleren Verschmutzung und
der größte Speicherwert für die Ventilstellung der kleinsten Verschmutzung entspricht.

5. Verfahren nach Anspruch 1, **dadurch gekennzeichnet, dass** die ermittelten Werte für die Ventilstellungen (VEST1, VEST2, VEST3) miteinander verglichen werden und bei Vorlieben zumindest einer Identität von wenigstens zwei Ventilstellungen (a1) und bei Nichtvorliegen eines Wertes einer Ventilstellung (VEST1, VEST2, VEST3), die dem eines geschlossenen Ventils entspricht und die identischen Speicherwerte für die Ventilstellung (a1) größer als der abweichende Speicherwert (a2) für die Ventilstellung sind, eine Meldung, dass eine Filterreinigung im aktuellen Betriebszustand nicht möglich ist, erzeugt wird und der Speicherwert für den Maximaldruck p_{maxVE} des Filters mit dem abweichenden Speicherwert (a2) für die Ventilstellung auf Null gesetzt wird, wonach die Speicherwerte für den maximalen Druck p_{maxVE1} bis p_{maxVE} verglichen werden und ein Diagnoseergebnis erzeugt wird, bei welchem
- der kleinste Speicherwert max. Druck p_{maxVE} der stärksten Verschmutzung,
- der mittlere Speicherwert max. Druck p_{maxVE} einer mittleren Verschmutzung und
- der größte Speicherwert max. Druck p_{maxVE} der kleinsten Verschmutzung entspricht.

6. Verfahren nach Anspruch 1, **dadurch gekennzeichnet, dass** die ermittelten Werte für die Ventilstellungen (VEST1, VEST2, VEST3) miteinander verglichen werden und bei Vorliegen zumindest einer Identität von wenigstens zwei Ventilstellungen (a1) und bei Nichtvorliegen eines Wertes einer Ventilstellung (VEST1, VEST2, VEST3), die dem eines geschlossenen Ventils entspricht und die identischen Speicherwerte für die Ventilstellung (a1) kleiner als der abweichende Speicherwert (a2) für die Ventilstellung sind, eine Meldung, dass eine Filterreinigung im aktuellen Betriebszustand nicht möglich ist, erzeugt wird und der Speicherwert für den Maximaldruck p_{maxVE} des Filters mit dem abweichenden Speicherwert (a2) für die Ventilstellung auf Null gesetzt wird, wonach die Speicherwerte für den maximalen Druck p_{maxVE1} bis p_{maxVE} verglichen werden und ein Diagnoseergebnis erzeugt wird, bei welchem
- der mittlere Speicherwert max. Druck der stärksten Verschmutzung,
- der größte Speicherwert max. Druck einer mittleren Verschmutzung und
- der kleinste Speicherwert max. Druck der kleinsten Verschmutzung entspricht.

7. Verfahren nach Anspruch 1, **dadurch gekennzeichnet, dass** die ermittelten Werte für die Ventilstellungen (VEST1, VEST2, VEST3) verglichen werden und bei Vorliegen zumindest einer Identität von wenigstens zwei Ventilstellungen (a1) und bei Vorliegen eines Wertes einer Ventilstellung (VEST1, VEST2, VEST3), die dem eines geschlossenen Ventils entspricht und die identischen Speicherwerte für die Ventilstellung (a1) größer als der abweichende Speicherwert (a2) für die Ventilstellung sind, der Speicherwert für den Maximaldruck p_{maxVE} des Filters mit dem abweichenden Speicherwert (a2) für die Ventilstellung auf Null gesetzt wird, wonach die Speicherwerte für den maximalen Druck p_{maxVE1} bis p_{maxVEn} verglichen werden und ein Diagnoseergebnis erzeugt wird, bei welchem
- der kleinste Speicherwert für die Ventilstellung der stärksten Verschmutzung, der mittlere Speicherwert für die Ventilstellung einer mittleren Verschmutzung und
- der größte Speicherwert für die Ventilstellung der kleinsten Verschmutzung entspricht.

## Claims

1. Diagnostic process, in particular for determining the level of clogging of an individual filter unit (6.1, 6.2, 6.3) in a parallel connection of at least two individual filter units (6.1, 6.2, 6.3) in a filter system (5) for filtering media, in particular application media for fibrous webs, having a device (23) for monitoring the differential pressure between an inlet (35) and an outlet (36) of the filter system (5), the inlet (35) being formed by a central feed line (19), which is connected via in each case at least one valve device (VE1, VE2, VE3) to the individual filter units (6.1, 6.2, 6.3),
**characterized in that**
a) on at least two filter units, preferably each filter unit (6.1, 6.2, 6.3) successively, the supply of medium to be filtered is reduced as far as completely interrupted over a predefined time period tx by activating the valve device (VE1, VE2, VE3) assigned thereto and,
- during this time period tx, the maximum values of the pressure pₘₐₓ in the central feed line (19) are registered continuously and stored as a stored value p_{maxVE} for the actuation of this valve device,
- at the same time the magnitudes of the volume flow and the pressure difference p_{d} between inlet (35) and outlet (36) being registered and
- when a predefined drop in throughput or
- a specific maximum permissible pressure difference p_{dmax-zul} is reached, a value for the current valve setting position (VEST1, VEST2, VEST3) is registered and the valve device (VE1, VE2, VE3) is opened again over a predefined time period;
b) in which, following the completion of a), an evaluation process is carried out for the variables determined for the individual filter units (6.1, 6.2, 6.3).

2. Process according to Claim 1, **characterized in that** the evaluation process comprises the following process steps:
comparison of the magnitude of the valve positions (VEST1, VEST2, VEST3) determined and, in the event that they are all identical, comparison of the stored values for the maximum pressure values p_{maxVE1} to p_{maxVEn} which were determined when closing the individual valve devices (VE1, VE2, VE3), depending on the magnitudes of the pressure values p_{maxVE1} to p_{maxVEn,} the filter having the lowest stored value for the maximum pressure p_{maxVE} is diagnosed as the filter having the most severe clogging, the filter or the filters having the medium stored values, depending on the magnitude of the pressure values, being diagnosed as to be cleaned one after another, and the filter having the largest stored value being diagnosed as the filter having the least clogging.

3. Process according to Claim 1, **characterized in that** the valve positions (VEST1, VEST2, VEST3) determined are compared and, in the absence of identity of the magnitudes and the absence of a value of a valve position (VEST1, VEST2, VEST3) which corresponds to that of a closed valve, a notification is output that
- filter cleaning in the current operating state is not possible and
- the level of clogging is diagnosed,
the lowest stored value for the valve position corresponding to the most severe clogging,
the medium stored value for the valve position corresponding to the moderate clogging
and
the largest stored value for the valve position corresponding to the least clogging.

4. Process according to Claim 1, **characterized in that** the valve positions (VEST1, VEST2, VEST3) determined are compared with one another and, in the absence of identity of the magnitudes and the presence of a value of a valve position (VEST1, VEST2, VEST3) which corresponds to that of a closed valve, a level of clogging is diagnosed,
the lowest stored value for the valve position corresponding to the most severe clogging,
the medium stored value for the valve position corresponding to moderate clogging
and
the largest stored value for the valve position corresponding to the least clogging.

5. Process according to Claim 1, **characterized in that** the values determined for the valve positions (VEST1, VEST2, VEST3) are compared with one another and, if at least two valve positions (a1) are identical and in the absence of a value of a valve position (VEST1, VEST2, VEST3) which corresponds to that of a closed valve and the identical stored values for the valve position (a1) are higher than the deviating stored value (a2) for the valve position, a message is generated to the effect that filter cleaning in the current operating state is not possible and the stored value for the maximum pressure p_{maxVE} of the filter having the deviating stored value (a2) for the valve position is set to 0, after which the stored values for the maximum pressure p_{maxVE1} to p_{maxVE} are compared and a diagnostic result is generated, in which
- the lowest stored value max. pressure p_{maxVE} corresponds to the most severe clogging,
- the medium stored value max. pressure p_{maxVE} corresponds to moderate clogging
and
- the highest stored value max. pressure p_{maxVE} corresponds to the least clogging.

6. Process according to Claim 1, **characterized in that** the values determined for the valve positions (VEST1, VEST2, VEST3) are compared with one another and if at least two valve positions (a1) are identical and in the absence of a value of a valve position (VEST1, VEST2, VEST3) which corresponds to that of a closed valve and the identical stored values for the valve position (a1) are lower than the deviating stored value (a2) for the valve position, a message is generated to the effect that filter cleaning in the current operating state is not possible and the stored value for the maximum pressure p_{maxVE} of the filter having the deviating stored value (a2) for the valve position is set to 0, after which the stored values for the maximum pressure p_{maxVE1} to p_{maxVE} are compared and a diagnostic result is generated, in which
- the medium stored value max. pressure corresponds to the most severe clogging,
- the highest stored value max. pressure corresponds to moderate clogging
and
- the lowest stored value max. pressure corresponds to the least clogging.

7. Process according to Claim 1, **characterized in that** the values determined for the valve positions (VEST1, VEST2, VEST3) are compared and if at least two valve positions (a1) are identical and in the presence of a value of a valve position (VEST1, VEST2, VEST3) which corresponds to that of a closed valve and the identical stored values for the valve position (a1) are higher than the deviating stored value (a2) for the valve position, the stored value for the maximum pressure p_{maxVE} of the filter having the deviating stored value (a2) for the valve position is set to 0, after which the stored values for the maximum pressure p_{maxVE1} to p_{maxVEn} are compared and a diagnostic result is generated, in which
- the lowest stored value for the valve position corresponds to the most severe clogging,
- the medium stored value for the valve position corresponds to moderate clogging
and
- the highest stored value for the valve position corresponds to the least clogging.

## Revendications

1. Procédé de diagnostic et en particulier de détection du degré d'encrassement d'un dispositif distinct de filtre (6.1, 6.2, 6.3) dans un raccordement en parallèle d'au moins deux dispositifs distincts de filtre (6.1, 6.2, 6.3) d'une installation de filtration (5) qui filtre des fluides, en particulier des fluides destinés à être appliqués sur des nappes de fibres, à l'aide d'un dispositif (23) de surveillance de la perte de charge entre une entrée (35) et une sortie (36) de l'installation de filtration (5),
l'entrée (35) étant formée par un conduit central d'amenée (19) relié par au moins un dispositif de vanne (VE1 VE2, VE3) respectif aux différents dispositifs de filtre (6.1, 6.2, 6.3),
**caractérisé en ce que**
a) sur au moins deux et de préférence sur chaque dispositif de filtre (6.1, 6.2, 6.3), l'amenée de fluide à filtrer est diminuée jusqu'à être interrompue complètement en une durée tx prédéfinie par commande du dispositif de vanne (VE1, VE2, VE3) qui lui est associé,
**en ce que** pendant cette durée tx, la valeur maximale de la pression pₘₐₓ qui règne dans le conduit central d'amenée (19) est saisie en continu et est conservée sous la forme d'une valeur de mémoire p_{maxVE} pour actionner ce dispositif de soupape,
**en ce que** le niveau du débit volumique et la perte de charge p_{d} entre l'entrée (35) et la sortie (36) sont en même temps détectés et
**en ce que** lorsqu'une chute prédéfinie de débit ou une perte de charge maximale admissible définie p_{dmax-zul} sont atteintes, la valeur actuelle de position (VEST1, VEST2, VEST3) de la vanne est saisie et le dispositif de vanne (VE1, VE2, VE3) est de nouveau ouvert pendant une durée prédéfinie et
b) **en ce que** lorsque la phase a) est terminée, une opération d'évaluation est exécutée sur les grandeurs déterminées pour les différents dispositifs de filtre (6.1, 6.2, 6.3).

2. Procédé selon la revendication 1, **caractérisé en ce que** l'opération d'évaluation comprend les étapes suivantes :
comparaison des grandeurs de position (VEST1, VEST2, VEST3) déterminées pour les vannes et, lorsqu'elles sont toutes identiques, comparaison des valeurs de mémoire de la pression maximale p_{maxVE1} à p_{maxVEn} qui ont été déterminées lors de la fermeture des différents dispositifs de vanne (VE1, VE2, VE3), tandis que selon les niveaux de valeurs de pression P_{maxVE1} à p_{maxVEn}, le filtre qui présente la plus petite valeur de mémoire de la pression maximale p_{maxVE} est diagnostiqué comme étant le filtre qui présente le plus fort encrassement, le ou les filtres qui présentent des valeurs de mémoire moyennes étant diagnostiqués comme devant être nettoyés successivement en fonction du niveau des valeurs de pression et le filtre qui présente la plus grande valeur de mémoire est diagnostiqué comme étant le filtre qui présente le plus faible encrassement.

3. Procédé selon la revendication 1, **caractérisé en ce que** les positions (VEST1, VEST2, VEST3) déterminées pour les vannes sont comparées et, lorsque les grandeurs ne sont pas identiques et qu'aucune valeur de position (VEST1, VEST2, VEST3) de vanne ne correspond à une vanne fermée, une indication selon laquelle le nettoyage du filtre n'est pas possible dans l'état actuel de fonctionnement est délivrée et le degré d'encrassement est diagnostiqué, la plus petite valeur de mémoire de la position de vanne correspondant à l'encrassement le plus fort, la valeur moyenne de mémoire de position de vanne correspondant à un encrassement moyen et la plus grande valeur de mémoire de position de vanne correspond au plus faible encrassement.

4. Procédé selon la revendication 1, **caractérisé en ce que** les valeurs de position (VEST1, VEST2, VEST3) déterminées pour les vannes sont comparées les unes aux autres et **en ce que** si les grandeurs ne sont pas identiques et si la valeur de position (VEST1, VEST2, VEST3) d'une vanne correspond à une vanne fermée, un degré d'encrassement est diagnostiqué, la plus petite valeur de mémoire de position de vanne correspondant à l'encrassement le plus fort, la moyenne valeur de mémoire de position de vanne correspondant à un encrassement moyen et la plus grande valeur de mémoire de position de vanne correspondant à l'encrassement le plus faible.

5. Procédé selon la revendication 1, **caractérisé en ce que** les valeurs de position (VEST1, VEST2, VEST3) déterminées pour les vannes sont comparées les unes aux autres et **en ce que** si au moins deux positions de vanne (a1) sont identiques, si aucune valeur de position (VEST1, VEST2, VEST3) de vanne ne correspond à une vanne fermée et si les valeurs de mémoire (a1) identiques de position de vanne sont supérieures à la valeur de mémoire (a2) de position de vanne qui en diffère, un message selon lequel un nettoyage du filtre n'est pas possible dans l'état de fonctionnement actuel est formé et la valeur de mémoire de la pression maximale p_{maxVE} du filtre qui présente la valeur de mémoire (a2) de position de vanne différente est mise à zéro, suite à quoi les valeurs de mémoire de la pression maximale p_{maxVE1} à p_{maxVE} sont comparées et le diagnostic donne un résultat selon lequel la plus petite valeur de mémoire de la pression maximale p_{maxVE} correspond à l'encrassement le plus fort, la moyenne valeur de mémoire de la pression maximale p_{maxVE} correspond à un encrassement moyen et la plus grande valeur de mémoire de la pression maximale p_{maxVE} correspond à l'encrassement le plus faible.

6. Procédé selon la revendication 1, **caractérisé en ce que** les valeurs de position (VEST1, VEST2, VEST3) déterminées pour les vannes sont comparées les unes aux autres et si au moins deux positions de vanne (a1) sont identiques, si aucune valeur de position (VEST1, VEST2, VEST3) de vanne ne correspond à une vanne fermée et si les valeurs de mémoire identiques de position de vanne (a1) sont inférieures à la valeur de mémoire (a2) de position de vanne qui en diffère, un message selon lequel un nettoyage de filtre n'est pas possible dans l'état actuel de fonctionnement est formé et la valeur de mémoire de la pression maximale p_{maxVE} du filtre qui présente une valeur de mémoire différente (a2) de position de vanne est mise à zéro, suite à quoi les valeurs de mémoire des pressions maximales p_{maxVE1} à p_{maxVE} sont comparées et le diagnostic produit un résultat selon lequel la moyenne valeur de mémoire de la pression maximale correspond à l'encrassement le plus fort, la plus grande valeur de mémoire de la pression maximale correspond à un encrassement moyen et la plus petite valeur de mémoire de la pression maximale correspond à l'encrassement le plus faible.

7. Procédé selon la revendication 1, **caractérisé en ce que** les valeurs de position (VEST1, VEST2, VEST3) déterminées pour les vannes sont comparées et si au moins deux positions de vanne (a1) sont identiques, si la valeur de position (VEST1, VEST2, VEST3) d'une vanne correspond à une vanne fermée et si les valeurs de mémoire identiques de position de vanne (a1) sont plus grandes que la valeur de mémoire (a2) de position de vanne qui en diffère, la valeur de mémoire de la pression maximale p_{maxVE} du filtre qui présente la valeur de mémoire différente (a2) de position de vanne est mise à zéro, suite à quoi les valeurs de mémoire des pressions maximales p_{maxVE1} à p_{maxVEn} sont comparées et le diagnostic fournit un résultat selon lequel la plus petite valeur de mémoire de position de vanne correspond à l'encrassement le plus fort, la moyenne valeur de mémoire de position de vanne correspond à un encrassement moyen et la plus grande valeur de mémoire de position de vanne correspond à l'encrassement le plus faible.
